# EUROPEAN PATENT APPLICATION

(11) **EP 1 138 646 A1**
(43) Date of publication of application: **04.10.2001**
(21) Application number: 99944813.7
(22) Date of filing: 24.09.1999
(51) Int. Cl.: C04B 35/00, C04B 35/632

(54) **CARBONACEOUS REFRACTORY WITH HIGH RESISTANCE TO SPALLING AND PROCESS FOR PRODUCING THE SAME**

(71) Applicant: Shinagawa Refractories Co., Ltd., Tokyo 100-0004 (JP)
(72) Inventor: NOMURA, Osamu, Shinagawa Refractories Co., Ltd., Tokyo 100-0004 (JP); KURASHINA, Yukinobu, Shinagawa Refractories Co Ltd, Tokyo 100-0004 (JP); TADA, Hidenori, Shinagawa Refractories Co., Ltd., Tokyo 100-0004 (JP); HOSHIYAMA, Yasuhiro, Shinagawa Refractories Co Ltd, Tokyo 100-0004 (JP); TORIGOE, Atsushi, Shinagawa Refractories Co., Ltd., Tokyo 100-0004 (JP)
(74) Representative: HOFFMANN - EITLE
(86) International application number: JP9905220
(87) International publication number: WO0121544

(57) **Abstract**

A combined use of a binder having a low residual ratio and a refractory raw material having a specific particle size distribution provides a refractory structure of high packing and high density which can keep its carbon bonding strength low to produce carbon-containing refractories excellent in resistance to damage as well as corrosion. The invention relates to carbon-containing refractories made from a raw material mixture containing a refractory raw material, a carbon material and a binder, wherein the refractory raw material comprises 30% by weight or less of particles of 0.3 mm or smaller and 20 to 90% by weight of particles of 1 mm or greater each based on 100% by weight of the total refractory raw material, and the binder has a residual ratio of 30% by weight or less.

## Description

### Technical Field:

This invention relates to carbon-containing refractories and a process for producing the same. More particularly it relates to carbon-containing refractories excellent in spalling resistance and corrosion resistance and a process of producing the same.

### Background Art:

Refractories containing a carbon raw material such as graphite have been used widely in various metallurgical applications for their high durability attributed to the properties of carbon, such as high thermal conductivity and insusceptibility to wetting with molten slag.

With the recent trend for metal products to gain in function as typically represented by steel products with increased performance, the conditions of use of this type of refractories have been made severer and severer, and further improvement on durability of carbon-containing refractories has been demanded.

Refractory characteristics of concern for improving the durability of carbon-containing refractories include spalling resistance, corrosion resistance, and wear resistance. Of these refractory characteristics, spalling is a phenomenon which fatally reduces the durability of refractories and is regarded as a top priority to be addressed.

In considering spalling of refractories, i.e., peeling due to initiation and extension of cracks, the mechanical characteristics of refractories attributed to the binding structure are of importance. The technique of binder usage is highly influential on formation of the binding structure of refractories.

In the case of carbon-containing refractories, since no chemical bonds are formed between a refractory aggregate and a carbon material, a binder is indispensable for forming a refractory structure. Organic binders such as phenolic resins and pitch are usually used. The organic binder is added in the form of liquid in a mixing or kneading operation to coat the surface of refractory raw material particles and binds them while they are formed and dried to form a refractory structure. On heating the resulting carbon-containing refractory structure, the fixed carbon of the organic binder present therein remains as carbon, which serves as a carbon bond in the refractory structure, asserting great influences on the characteristics of the refractories.

Application of various organic binders has been given studies chiefly for the purpose of improving spalling resistance. For example, JP-A-5-301759 discloses application of a binder resin having a high carbon residue or carbon residual ratio (hereinafter simply referred to as "a residual ratio") to refractories, suggesting that the high residual ratio leads to high strength. Further, addition of pitch powder having a high residual ratio has been proposed in an attempt to introduce spalling-resistant crystalline carbon of pitch origin into a refractory structure thereby to improve spalling resistance.

For example, JP-B-57-27867 and JP-A-2-268953 teach a method of improving intermediate strength by adding high-softening point pitch having a high residual ratio or pitch having been treated in high temperature to carbon-containing refractories. JP-A-5-270889 and Japanese Patent 2592219 disclose a method of strengthening carbon bonds by adding to carbon-containing refractories mesophase pitch having a high residual ratio or highly dispersible pitch having a certain range of a softening point.

These related techniques aim at improvement of spalling resistance of refractories by forming carbon bonds having superior spalling resistance. The basic concept common to them consists in (1) using an organic binder having as high a residual ratio as possible to bind a refractory aggregate and a carbon material via as dense carbon bonds as possible thereby to obtain high-strength refractories and (2) forming the binding carbon of crystalline carbon having superior spalling resistance thereby to improve the spalling resistance of the refractories.

Now considering the relation between spalling and mechanical characteristics of refractories, however, strength enhancement of refractories does not always lead to improvement in spalling resistance.

It is known that spalling of a material and its mechanical characteristics have a given relationship with respect to crack initiation and extension due to thermal shocks. Coefficients of resistance to thermal shock failure (R, R', R'', etc.) and coefficients of resistance to thermal shock damage (R''', R'''', etc.), and the like have been theoretically deduced as indices representing thermal shock resistance (see *Ceramics,* vol. 12, No. 2, pp. 150-55 (1977)).

In dealing with thermal stress fracture of refractories, it is generally considered that a thermal stress generated on receipt of a thermal shock is decided by the surrounding temperature condition and the heat transfer condition and the mechanical characteristics of the refractories, and crack initiation is discussed based on whether or not the thermal stress generated inside exceeds the fracture strength of the refractories. The problem addressed here is "initiation" of a crack. The coefficient of resistance to thermal shock failure (hereinafter simply referred to as failure resistance coefficient) out of the above-described theoretical resistance coefficients is said to be an index showing resistance against crack initiation. That is, a failure resistance coefficient is an index indicative of resistance to crack initiation. The greater the value, the less likely is crack initiation to happen.

It is known that a failure resistance coefficient is proportional with S/E, wherein S is the strength of a material, and E is the elastic modulus of the material. Hence, a means to be taken is to enhance the strength of the refractories thereby to improve the failure resistance of refractories. All the above-mentioned manipulations, i.e., use of a binder having a high residual ratio and strengthening of refractories by strengthening carbon bonds, are carried out with the intention of improving the failure resistance, i.e., resistance against crack initiation.

On the other hand, there are cases in which crack initiation itself does not lead to fatal damage of refractories but spalling damage rather depends on the degree of crack extension. A coefficient of resistance to thermal shock damage (hereinafter simply referred to as a damage resistance coefficient) is known as an index indicative of resistance against crack extension. That is, a damage resistance coefficient is an index of resistance to crack extension. The greater the value, the less likely is a crack to extend.

Because a damage resistance coefficient is proportional to E/S², strengthening of refractories is accompanied by reduction in damage resistance. It is apparent that damage resistance decreases considerably by the factor S² with an increase of the strength S of a material, i.e., the reduction is exponentially.

As stated above, what is generally called "spalling" includes two phenomena - crack initiation and crack extension. When mechanical characteristics of refractories are varied, failure resistance and damage resistance show opposite tendencies. Therefore, the above-described methods relying on carbon bond strengthening bring an improvement in failure resistance on one hand and a reduction in damage resistance on the other hand. While spalling occurring in carbon-containing refractories in actual use is observed as a peeling phenomenon, two stages of crack initiation and crack extension are involved before such a peeling phenomenon takes place.

An improvement in failure resistance suppresses crack initiation but reduces damage resistance so that a crack once initiated is more liable to extend. As a result, the overall spalling resistance is not so improved. In some cases, durability can be lessened. In order to reduce spalling in actual use it is necessary to improve both failure resistance and damage resistance. It is especially important to improve damage resistance.

On the other hand, application of organic matter having a low residual ratio as a binder of carbon-containing refractories is found in several related techniques. For example, JP-A-52-32912 discloses use of a hexahydric polyol, such as sorbitol, mannitol or polysorbitol, and JP-W-7-504641 shows a method comprising uniformly mixing a refractory raw material with an aqueous solution or suspension of an organic non-aromatic polymer, such as polyacrylate, vinyl polymers, polyols, and methyl cellulose.

However, these methods do not secure sufficient forming performance so that two-stage forming is needed or the resulting refractories have poor corrosion resistance. They are not seen as adequate for obtaining suitable refractories at low cost.

JP-A-9-221370 discloses use of saccharification products of starch or saccharification products of reducing sugar and a solvent as a binder. According to this method, there is no problem of forming performance, and high corrosion resistance can be secured. However, because of the low residual ratio of this binder, the contact among refractory aggregate particles increases in high temperature. It follows that the refractory aggregate particles are sintered together while heated in high temperature for a long time to produce an increased number of binding sites. As a result, the strength and the elastic modulus increase, and the damage resistance reduces, which is disadvantageous for spalling resistance in actual use of the refractories.

An organic binder having a low residual ratio as used in the present invention gives a mixture sufficient lubricity as long as its viscosity is properly adjusted. However, it is inferior in self-bonding properties to conventionally used binder resins having a high residual ratio so that a refractory raw material mixture tends to show a considerable springback in forming to reduce the packing density.

Therefore, mere use of a binder whose residual ratio is as low as 30% by weight or less gives rise to the problem that the resulting carbon-containing refractories would have insufficient packing properties for providing a dense structure and, as a result, have reduced corrosion resistance as has been encountered with the above-described related art.

The present invention has been made in the light of the above problems. It is an object of the present invention to provide carbon-containing refractories excellent in spalling resistance as well as corrosion resistance and a process for producing the same.

### Disclosure of the Invention:

Noting the blind spot of conventional techniques, i.e., the fact that strengthening of refractories through strengthening carbon bonds does not always bring about improvement on spalling resistance, the present inventors have researched into how to prevent reductions in corrosion resistance or damage resistance in high-temperature and long-time heating, which are problems arising from the use of a binder having a low residual ratio.

They have also investigated the relation between a binder and the particle size of refractory raw materials, noting that refractory raw materials ordinarily used in carbon-containing refractories comprise from fine particles of about 0.01 mm to coarse grains of about 10 mm and that the particle size of an aggregate has been selected in accordance with the characteristics required of carbon-containing refractories, suchas suppression of joint damage and improvement on spalling resistance (see, e.g., JP-B-5-155655 and JP-B-7-17758).

As a result of the researches and investigations, the inventors have found that a combined use of a binder having a low residual ratio and a refractory raw material having a specific particle size distribution makes it possible to obtain a refractory structure of high packing properties and high density while keeping carbon bond strength low and thus developed carbon-containing refractories which are excellent in not only damage resistance but corrosion resistance.

The term "particle size (distribution)" of a refractory raw material as used herein denotes one determined or measured with test sieves which are generally used for classification of refractory raw materials. The particle size of refractory particles in prepared carbon-containing refractories can be obtained as, for example, an arithmetic mean of breadth and length of refractory raw material particles observed on a cut area.

The gist of the present invention (the subject matter specifying the invention) resides in:
(1) Carbon-containing refractories made from a raw material mixture containing a refractory raw material, a carbon material and a binder, characterized in that the refractory raw material comprises 30% by weight or less of particles of 0.3 mm or smaller and 20 to 90% by weight of particles of 1 mm or greater each based on 100% by weight of the total refractory raw material and that the binder has a residual ratio of 30% by weight or less.

In particular, the present invention produces the following effects:
(2) Where the binder has a viscosity of 100 poise (P) or lower,
   it is capable of coating the surface of constituting raw materials sufficiently and uniformly in a kneading operation. As a result, sufficient lubricity can be secured among raw material particles during forming to provide a dense green body;
(3) Where the refractory raw material contains at least one member selected from the group consisting of alumina, silicon carbide, magnesia and spinel, high corrosion resistance can be obtained; and
(4) Where the carbon material comprises graphite at least partly, the carbon-containing refractories are excellent in oxidation resistance and corrosion resistance.
(5) Further, the carbon-containing refractories according to the present invention are made from a raw material mixture containing a refractory raw material, a carbon material, and a binder, binder, characterized by having an E/S² ratio of 2.7 x 10⁻⁴ (Pa)⁻¹ or greater after firing, wherein E is an elastic modulus (Pa), and S is a modulus of rupture (Pa).
   The gist of the present invention (the subject matter specifying the invention) also resides in:
(6) A process for producing carbon-containing refractories comprising mixing, forming, drying and, if necessary, firing a raw material mixture containing a refractory raw material, a carbon material, and a binder, characterized by using the raw material mixture in which the refractory raw material comprises 30% by weight or less of particles of 0.3 mm or smaller and 20 to 90% by weight of particles of 1 mm or greater each based on 100% by weight of the total refractory raw material, and the binder has a residual ratio of 30% by weight or less.

### Best Mode for Carrying out the Invention:

The present invention relates to a spalling-resistant and corrosion-resistant carbon-containing refractories and a process of producing the same by using a specific binder and a specific refractory raw material. The present invention introduces an utterly new thought to the technical field of highly durable carbon-containing refractories, being far beyond the conventional common knowledge in that a binder having a low residual ratio, which has never been conceived to be applicable to such carbon-containing refractories, is used positively for improvement of characteristics. At the same time, the invention specifies the amounts of fine particles of 0.3 mm or smaller and coarse grains of 1 mm or greater which are used as the refractory raw material to provide desired carbon-containing refractories.

The terminology "residual ratio" as used for binders in the invention usually denotes a weight ratio of a residue left after a binder under analysis is heated at 800°C in an oxygen-free atmosphere or a weight ratio of a residue left after the binder actually present in a carbon-containing refractory structure is heated red-hot.

The term "carbon-containing refractories" as used herein is intended to include shaped or monolithic and burned or unburnt refractories.

The present invention will hereinafter be described in detail.

### [I] Binder

The basic functions of the binder having a residual ratio of 30% by weight or less (either in a liquid state or in a suspension state), which is a feature of the present invention, are as follows.

The first function is to give an adequate liquid content to a mixture thereby to secure forming performance. This is the most important function of a binder. Forming is generally performed by densely packing constituent raw materials under pressure. A liquid content is needed to reduce the frictional resistance among the raw material particles, and a mixing or kneading operation is required to disperse the liquid content on the particle of the constituent raw materials.

Accordingly, the binder used in the invention should wet the refractory raw material and the carbon material and coat the surface of the constituent raw materials sufficiently uniformly in a mixing or kneading operation as is required of commonly employed binders. It is therefore desirable of necessity for the binder to have a low viscosity to some extent. The binder preferably has a viscosity of 100 P or lower, particularly 60 P or lower, at a mixing or kneading temperature.

The second function is to maintain both strength S and elastic modulus E low while achieving high packing properties. It has been a basic thought of binder technology in the field of carbon-containing refractories to choose a binder having as high a residual ratio as possible. To the contrary, the present invention is to make a changeover in way of thinking and is characterized by use of a binder having a low residual ratio.

Because the binder used in the invention has a lower residual ratio than the organic binders used in the state-of-the-art carbon-containing refractories, the refractories maintain a low strength S in high temperature and a low elastic modulus E. Since the binder used in the invention has a lower residual ratio than the conventionally used ones, the resulting refractories have a lower content of carbon which is originated in the binder and remains in the refractory structure when treated at a temperature at or above the carbonization temperature and therefore have a fewer bonding sites at which the constituent raw material particles are bonded together. Owing to the fewer bonding sites among raw material particles, the refractories exhibit a low strength at high temperature and a low elastic modulus.

In order to produce the above effect of action sufficiently, the binder preferably has a residual ratio of 30% by weight or less, particularly 20% by weight or less. If the residual ratio of a binder exceeds 30% by weight, the strength in high temperature and the elastic modulus rise to reduce the damage resistance coefficient.

While there is no particular lower limit for the residual ratio of the binder, too low a residual ratio, e.g., a residual ratio less than 5% by weight, tends to result in too low strength in high temperature, making it difficult to hold the refractory structure. In such cases, it is desirable that the residual ratio of the binder be adjusted within a range of 30% by weight.

Binders mainly comprising an organic substance can be used in the form of a liquid or a suspension in the invention as a binder having a low residual ratio.

Organic substances useful as a binder include (a) resins, such as phenolic resins, furan resins, and epoxy resins, (b) organic aromatic polymers, such as pitch and tar, (c) fatty acid derivatives, such as glycerides of stearic acid, palmitic acid, etc., waxes, fats, and fatty oils, (d) saccharides, such as hexapolyols (e.g., sorbitol and mannitol), maltose, trehalose, and amylose, andhydrolyzate thereof or sizes, and (e) industrial liquid waste such as pulp waste and molasses waste.

The binder having a low residual ratio to be used in the invention is not limited to the above-listed ones, and any other synthetic or naturally occurring organic compounds can be used arbitrarily as far as their residual ratio is 30% by weight or less.

The binder having a low residual ratio to be used in the invention can contain solvents and the like for the purpose of adjusting the viscosity or self-adhesiveness. The solvent to be used is arbitrarily chosen from those generally employed as a solvent, such as alcohols, e.g., ethanol and methanol; polyhydric alcohols, e.g., ethylene glycol and glycerol; esters, e.g., benzyl acetate and diethyl phthalate; water, xylene, toluene, and phenol. The solvent to be used is not particularly limited as long as the effect of action of the present invention can be manifested sufficiently.

The mixing ratio of the solid content of the binder having a low residual ratio and the solvent is arbitrarily selected so as to modify the viscosity and the self-adhesiveness as desired. As a matter of course, the solvent can be used in such a state that a solid content and a solvent are not distinguished, where sufficient for producing the effect of action of the invention.

In addition to the solid content which mainly comprises organic matter, usage of the binder having a low residual ratio is not particularly restricted provided that the binder performs sufficient functions for displaying the effect of action of the invention, and any arbitrary compounds, such as those containing a metal element and derivatives thereof, can be used.

The amount of the binder to be used in the invention is not particularly limited and is subject to variation depending on the kind of the refractory raw material, the kind and amount of the carbon material, and the end use of the carbon-containing refractories. From the viewpoint of coating properties for the raw materials used and the denseness of the high-temperature structure, a suitable amount of the binder is usually 1.5 to 15% by weight based on 100% by weight of the raw material mixture.

### [II] Refractory raw material

The refractory raw materials which can be used in the present invention generally include, but are not limited to, oxides, such as magnesia, calcia, dolomite, spinel, alumina, silica, chromia, zirconia, and titania, and complex oxides thereof, mixtures thereof or melts thereof; and non-oxides, such as silicon carbide, silicon nitride, silicon oxynitride, boron nitride, boron carbide, and zirconium boride.

According to the present invention, the particle size distribution of the refractory raw material is specified with respect to the amounts of fine particles of 0.3 mm or smaller and of coarse grains of 1 mm or greater.

### 1. Fine particles of 0.3 mm or smaller

The restriction on the amount of fine particles of 0.3 mm or smaller and its effect of action will be explained. Fine particles of 0.3 mm or smaller of the refractory raw material are uniformly dispersed by kneading and forming to form a matrix together with the carbon material. As the proportion of the fine particles increases, the frequency of contact among the refractory raw material particles in the matrix increases. When a binder has a high residual ratio, because carbon of binder origin coats the surface of the refractory raw material particles, heating at a high temperature for a long time is not accompanied with progress of sintering even if the fine particles are present in a relatively high proportion.

However, when a binder has a low residual ratio so that the amount of carbon capable of coating the surface of the refractory raw material particles is reduced, an increased amount of the fine particles results in an increase of bonding sites due to sintering, causing such disadvantages as increases of the strength and elastic modulus of the carbon-containing refractories.

This is the reason why the proportion of the particles of 0.3 mm or smaller in the refractory raw material should be not more than 30% by weight. Even with a binder having a low residual ratio, it is possible to suppress an increase of bonding sites among the refractory material particles when heated at a high temperature for a long time, i.e., increases in the strength and elastic modulus of the refractories, by specifying that the fine particles should be present in a given proportion or less. If the refractory raw material has more than 30% by weight of the fine particles of 0.3 mm or smaller, the resulting refractories would have increased strength and elastic modulus when the raw materials are heated in high temperature for a long time and eventually have reduced damage resistance. In order to enhance the above effect of action, it is still preferred that the proportion of the particles of 0.3 mm or smaller in the refractory raw material be 25% by weight or less.

### 2. Coarse grains of 1 mm or greater

The restriction on the amount of coarse grains of 1 mm or greater and its effect of action will be explained. The coarse grains of 1 mm or greater exert an agitating action in mixing and kneading to accelerate dispersion of the binder having a low residual ratio to form a uniform binder film on the raw material particles. In forming, the coarse refractory raw material particles help pressure transmission in a mixture to achieve a high packing density deep in the center of the refractories. Further, springback due to insufficient self-bonding properties can be prevented by blocking among refractory raw material particles to provide a dense green body.

If the proportion of the particles of 1 mm or greater in the refractory raw material used in the invention exceeds 90% by weight, the coarse grains interfere with each other to reduce forming performance, resulting in a failure to obtain dense refractories. If the proportion of the particles of 1 mm or greater is less than 20% by weight, the effect in improving denseness by improving forming performance is not obtained any longer.

The dense refractory structure thus obtained is retained throughout the successive operation of drying or firing and in actual use of refractories and exhibits excellent anticorrosion against molten metal or molten slag. In order to enhance the above effect of action, the proportion of the particles of 1 mm or greater in the refractory raw material is still preferably in a range of from 35 to 85% by weight.

As stated above, the purpose of specifying the particle size distribution of the refractory raw material to be used in the invention is different from the purposes as aimed at in the aforementioned related art. That is, the upper limit of the proportion of fine particles of 0.3 mm or smaller is specified to suppress reduction in thermal shock resistance of carbon-containing refractories containing a binder having a low residual ratio, and the range of the proportion of coarse grains of 1 mm or greater is specified so as to form a dense refractory structure thereby securing corrosion resistance of carbon-containing refractories. The technique of using a binder having a specific residual ratio combined with the specific particle size distribution produces remarkable synergistic effects.

### [III] Carbon material

The carbon material which can be used in the invention is not particularly limited. Those having a high fixed carbon content are preferred for maintaining the high-temperature structure, namely, securing corrosion resistance. Commonly employed carbon materials include natural graphite, such as flaky graphite and amorphous graphite, electrode waste, carbon fiber, and pyrolytic carbon.

The amount of the carbon material is preferably 2 to 40% by weight, while varying depending on the kind of the refractory raw material and the end use of the carbon-containing refractories of the invention. When the amount of the carbon material is less than 2%, the carbon material's insusceptibility to wetting with molten slag is not fully enjoyed. When the amount of the carbon material exceeds 40% by weight, the springback on forming is amplified, resulting in a failure to obtain a dense structure.

It is preferred that the carbon material to be used be pure and crystalline from the standpoint of corrosion resistance and oxidation resistance. Graphite materials such as flaky graphite are preferred in many cases. When weight is put on forming performance, it is preferred in some cases to use less deformable carbon materials other than flaky graphite.

If desired, the present invention is applicable to carbon-containing refractories having incorporated therein known additives, such as silicon, aluminum, pitch powder, and mesophase pitch, which are also included under the scope of the invention.

### [IV] Process of producing carbon-containing refractories

The process of producing the carbon-containing refractories according to the invention will now be described.

A raw material mixture comprising the refractory raw material and the carbon material is mixed with a binder and, if desired, additives, and the raw material mixture is kneaded into a mixture. The mixture is formed and baked at 120 to 500°C to produce unburned carbon-containing refractories. If necessary, operations for preparing a secondary raw material, such as granulation, coating, temporary forming, disintegration, and the like, can be conducted among the above operations. The carbon-containing refractories thus obtained can further be subjected to firing in a reducing atmosphere or an oxygen-free atmosphere at about 600 to 1500°C to produce burned products.

The carbon-containing refractories thus obtained comprise the raw material mixture comprising the refractory raw material, the carbon material and the binder and, after firing, have an E/S² ratio (S: modulus of rupture (Pa); E: elastic modulus (Pa)) of 2.7 x 10⁻⁴ (Pa)⁻¹ or greater. If the E/S² ratio is less than 2.7 x 10⁻⁴ (Pa)⁻¹, the refractories have low resistance to thermal shock damage, and cracks are readily expand, resulting in reduced spalling resistance.

While the operation termed "firing" as used herein is not particularly limited in temperature, heating at 600°C or higher is generally called "firing". As far as refractories are concerned, the upper limit of the firing temperature is about 1800°C. In this invention, too, the above temperature range is adopted as a firing temperature.

It is known that the term "elastic modulus" includes isothermal modulus and adiabatic modulus which often do not agree with each other. The terminology "elastic modulus" as used herein means adiabatic modulus of elasticity which is determined by an ultrasonic pulse method or an impact blow method (dynamic modulus of elasticity).

### Examples:

The carbon-containing refractories and the process of producing them according to the present invention will be illustrated in greater detail by way of Examples and Comparative Examples, but it should be understood that the present invention is not construed as being limited thereto. The binders used in Examples and Comparative Examples are shown in Table 1.

**TABLE 1**

| Kinds of Binders | | | | | | | |
|---|---|---|---|---|---|---|---|
| Binder | Binder used in Invention | | | | | Binder used in Compara. Examples | |
| | A | B | C | D | E | F | G |
| Epoxy resin | 100 | | | | | | |
| Phenolic resin | | 70 | | | | 75 | 85 |
| Urea resin | | | 80 | | | | |
| Starch saccharification products | | | | 50 | | | |
| Coal tar | | | | | 100 | | |
| Solvent*¹ | | 30 | 20 | 50 | 20 | 25 | 15 |
| Viscosity (P) | 20 | 60 | 5 | 15 | 35 | 80 | 250 |
| Residual ratio*² (wt%) | 10 | 26 | 4 | 10 | 21 | 43 | 48 |

| | | | | | | | |
|---|---|---|---|---|---|---|---|
| *1: A solvent or solvents selected appropriately from methanol, ethylene glycol, phenol, and water was/were used to adjust to the prescribed viscosity. | | | | | | | |
| *2: The weight percentage of the residual solid matter left after the binder was heated at 800°C in an oxygen-free atmosphere. | | | | | | | |

### EXAMPLES 1 TO 7 AND COMPARATIVE EXAMPLES 1 TO 5

### (Examples and Comparative Examples on Alumina Carbon)

The raw materials inclusive of the binder shown in Table 1 above were compounded in the mixing ratio shown in Table 2 below, kneaded, and pressed into a green body of 230 x 114 x 65 mm under a pressure of 150 MPa. The green body was baked at 200°C to obtain unburned carbon-containing refractories. The unburned carbon-containing refractories were subjected to reducing firing at 1500°C for as long a time as 20 hours.

S/E which is indicative of a coefficient of resistance to thermal shock failure, E/S² which is indicative of a coefficient of resistance to thermal shock damage, and a corrosion resistance index of the refractories of Examples 1 to 7 and Comparative Examples 1 to 5 were determined as follows. The results obtained are shown in Table 2 together with the bulk specific gravity of the unburned carbon-containing refractories and themodulus of rupture, elasticmodulus (dynamic modulus of elasticity by an impact blow method) and spalling resistance index of the burned carbon-containing refractories. Measurement of S/E and E/S²:

After the unburned carbon-containing refractories were reducing-fired at 1500°C for as long a time as 20 hours, the modulus of rupture and the elastic modulus (dynamic modulus of elasticity by an impact blow method) were measured. From the modulus of rupture S and the elastic modulus E were calculated S/E indicative of a coefficient of resistance to thermal shock failure and E/S² indicative of a coefficient of resistance to thermal shock damage.

### Measurement of corrosion resistance index:

Molten steel melted in an RF induction heating furnace was put in a crucible made of the above-described burned carbon-containing refractories, and slag by-produced in steel making was put thereon. A corrosion resistance index was calculated from the corrosion by the molten steel and the slag at 1650°C. The greater the index, the higher the corrosion resistance.

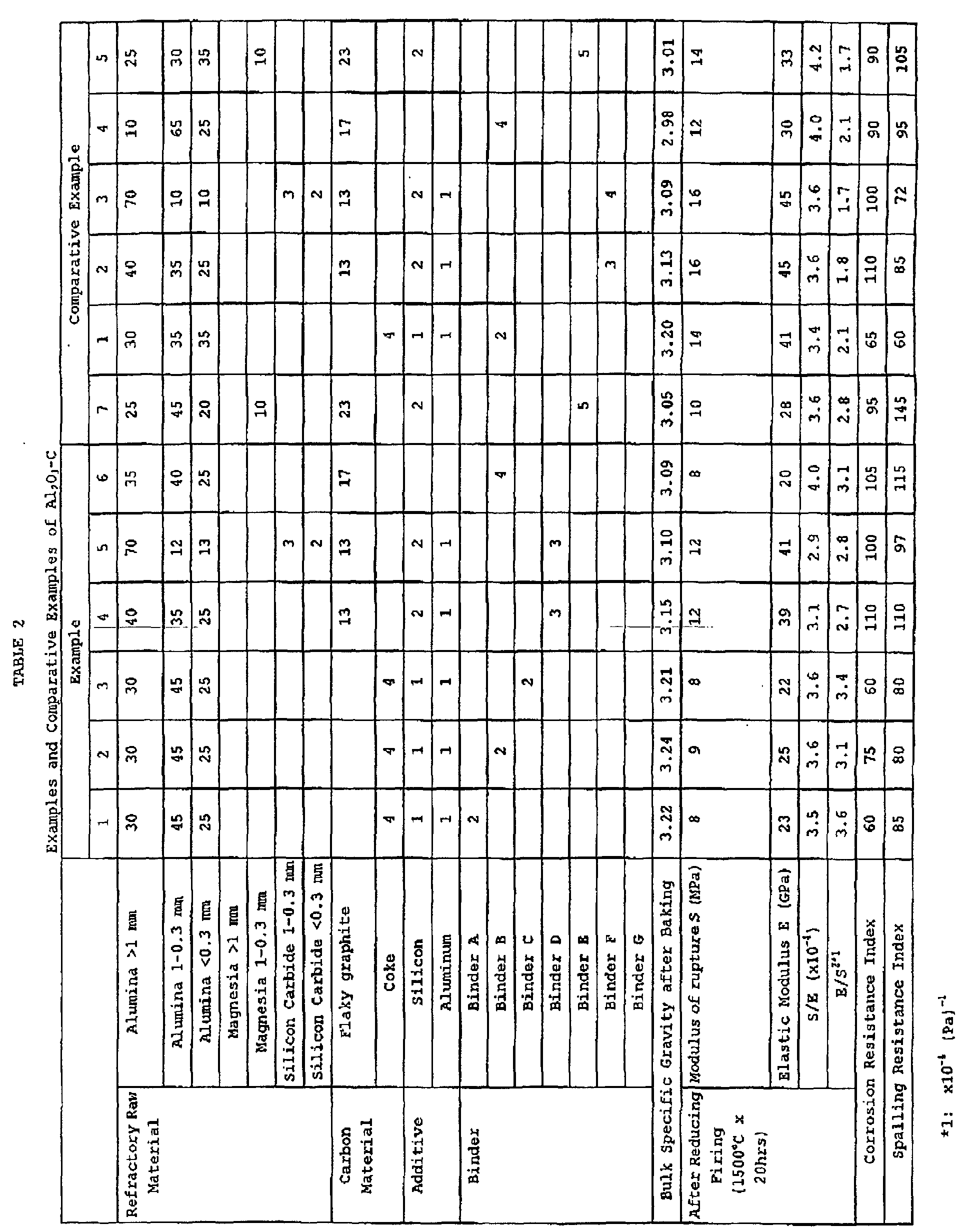

As shown in Table 2, comparisons between Examples 1 to 3 and Comparative Example 1 which are alumina-carbon bricks containing 4% coke as a carbon material reveal that Examples 1 to 3 according to the invention have a high bulk specific gravity ranging from 3.21 to 3.24 after baking, which shows improved packing properties, and are therefore equal or superior to Comparative Example 1 in corrosion resistance and also have a high E/S² [x10⁻⁴ (Pa)⁻¹] value of 3.1 or greater and are therefore excellent in spalling resistance.

Comparisons between Example 4 and Comparative Example 2 which are alumina-carbon bricks containing 13% flaky graphite as a carbon material prove that Example 4 according to the invention has a bulk specific gravity of 3.15 after baking, showing a slight improvement in packing properties and equality in corrosion resistance to Comparative Example 2, and has a high E/S² [x10⁻⁴ (Pa)⁻¹] of 2.7, showing excellent spalling resistance.

It is seen from Example 5 compared with Comparative Example 3, which are alumina silicon-carbide carbon bricks containing 13% flaky graphite as a carbon material, that Example 5 according to the invention has a bulk specific gravity of 3.10, showing a slight improvement in packing properties and equality to Comparative Example 3 in corrosion resistance, and has a high E/S² [x10⁻⁴ (Pa)⁻¹] of 2.8, showing superior in spalling resistance.

As is seen from comparisons between Example 6 and Comparative Example 4, which are alumina-carbon bricks containing 17% flaky graphite as a carbon material, Example 6 according to the invention has a high bulk specific gravity of 3.09 after baking, showing an improvement in packing properties and superiority in corrosion resistance to Comparative Example 4, and also has a high E/S² [x10⁻⁴ (Pa)⁻¹] of 3.1, showing superiority in spalling resistance.

Comparisons between Example 7 and Comparative Example 5, which are alumina-magnesia-carbon bricks containing 23% flaky graphite as a carbon material, shows that Example 7 according to the invention has a high bulk specific gravity of 3.05 after baking, which indicates improved packing properties and superior corrosion resistance as compared with Comparative Example 5, and also has a high E/S² [x10⁻⁴ (Pa)⁻¹] of 2.8 indicating excellent spalling resistance.

### EXAMPLES 8 TO 14 AND COMPARATIVE EXAMPLES 6 TO 10

### (Examples and Comparative Examples of Magnesia-Carbon)

The raw materials inclusive of the binder shown in Table 1 above were compounded in a mixing ratio shown in Table 3 below, kneaded, and pressed into a green body of 230 x 114 x 65 mm under a pressure of 150 MPa. The green body was baked at 200°C to obtain unburned carbon-containing refractories. The unburned carbon-containing refractories were subjected to reducing firing at 1500°C for as long a time as 20 hours.

S/E, which is indicative of a coefficient of resistance to thermal shock failure, E/S², which is indicative of a coefficient of resistance to thermal shock damage, and a corrosion resistance index of Examples 8 to 14 and Comparative Examples 6 to 10 were determined in the same manner as described above. The results obtained are shown in Table 3 together with the bulk specific gravity of the unburned carbon-containing refractories and the modulus of rupture and elastic modulus (dynamic modulus of elasticity by an impact blow method) after firing, and the spalling resistance index.

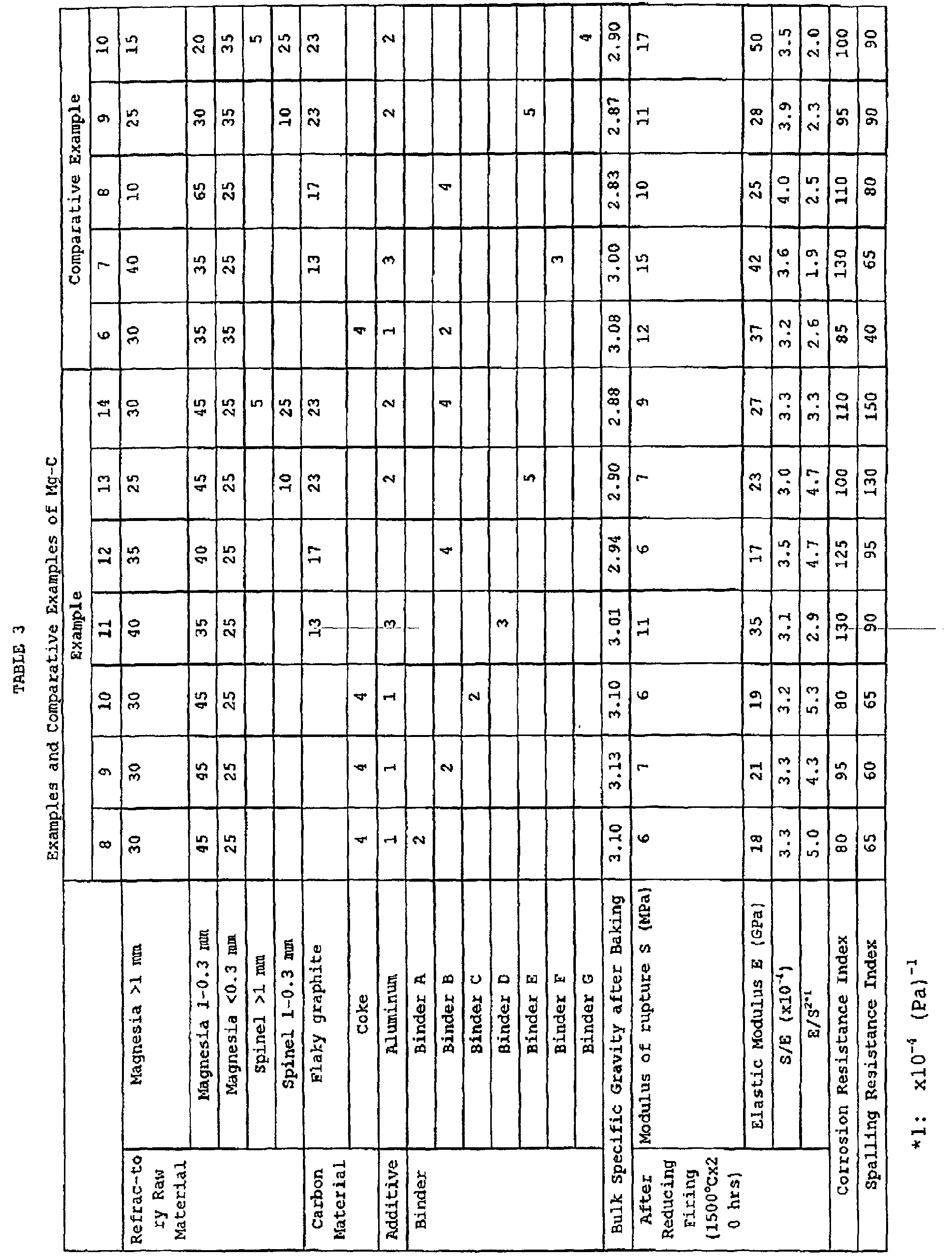

As is shown in Table 3, comparisons between Examples 8 to 10 and Comparative Example 6, which are magnesia-carbon bricks containing 4% coke as a carbon material, reveal that Examples 8 to 10 according to the invention have a high bulk specific gravity ranging from 3.10 to 3.13 after baking, showing improved packing properties and equality or superiority in corrosion resistance to Comparative Example 6, and also have a high E/S² [x10⁻⁴ (Pa)⁻¹] value of 4.3 or greater, proving superiority in spalling resistance.

Comparisons between Example 11 and Comparative Example 7, which aremagnesia-carbon bricks containing 13% flaky graphite as a carbon material, prove that Example 11 according to the invention has a bulk specific gravity of 3.01 after baking, showing a slight improvement in packing properties and excellent corrosion resistance as compared with Comparative Example 7, and also has a high E/S² [x10⁻⁴ (Pa)⁻¹] of 2.9, indicating superiority in spalling resistance.

Comparisons between Example 12 and Comparative Example 8, which aremagnesia-carbonbricks containing 17% flaky graphite as a carbon material, prove that Example 12 according to the invention has a bulk specific gravity of 2.94 after baking, showing a slight improvement in packing properties and excellent corrosion resistance as compared with Comparative Example 8, and also has a high E/S² [x10⁻⁴ (Pa)⁻¹] of 4.7, indicating superiority in spalling resistance.

It is seen from Examples 13 and 14 compared with Comparative Examples 9 and 10, which are magnesia-spinel-carbon bricks containing 23% flaky graphite as a carbon material, that Examples 13 and 14 according to the invention have a bulk specific gravity of from 2.88 to 2.90, showing equality or superiority to Comparative Examples 9 and 10 in packing properties, i.e., equality or superiority in corrosion resistance, and have a high E/S² [x10⁻⁴ (Pa)⁻¹] of from 3.3 to 4.7, marking superior spalling resistance.

With all these observations it is obvious from Tables 2 and 3 that the carbon-containing refractories of the invention are equal or superior to Comparative Examples in bulk specific gravity after baking to exhibit high corrosion resistance and that they keep their strength low even after high-temperature and long-time reducing firing to exhibit excellent resistance to thermal shock damage. It would be easily understood that, because of the markedly improved resistance to thermal shock damage and excellent corrosion resistance, the carbon-containing refractories according to the invention secure high durability in applications where carbon-containing refractories are used, for example, when used as a liner of iron making containers.

### Industrial Applicability:

As described above, the present invention consists in using a combination of a refractory raw material comprising 30% by weight or less of particles of 0.3 mm or smaller and 20 to 90% by weight of particles of 1 mm or greater each based on the total refractory raw material and a binder having a residual ratio of 30% by weight or less, thereby to provide spalling-resistant and corrosion-resistant carbon-containing refractories and a process of producing the same.

## Claims

1. Carbon-containing refractories made from a raw material mixture containing a refractory raw material, a carbon material and a binder, **characterized in that** said refractory raw material comprises 30% by weight or less of particles of 0.3 mm or smaller and 20 to 90% by weight of particles of 1 mm or greater each based on 100% by weight of the total refractory raw material and that said binder has a residual ratio of 30% by weight or less.

2. The carbon-containing refractories according to claim 1, **characterized in that** said binder has a viscosity of 100 P or lower.

3. The carbon-containing refractories according to claim 1 or 2, **characterized in that** said refractory raw material contains at least one member selected from the group consisting of alumina, silicon carbide, magnesia, and spinel.

4. The carbon-containing refractories according to claim 1 or 2, **characterized in that** said carbon material comprises graphite at least partly.

5. Carbon-containing refractories made from the raw material mixture containing a refractory raw material, a carbon material and a binder described in claim 1, **characterized by** having an E/S² ratio of 2.7 x 10⁻⁴ (Pa)⁻¹ or greater after firing, wherein E is an elastic modulus (Pa), and S is a modulus of rupture (Pa).

6. Aprocess for producing carbon-containing refractories comprising mixing, forming, drying and, if necessary, firing a raw material mixture containing a refractory raw material, a carbon material and a binder, **characterized by** using, as said raw material mixture, a mixture in which said refractory raw material comprises 30% by weight or less of particles of 0.3 mm or smaller and 20 to 90% by weight of particles of 1 mm or greater each based on 100% by weight of the total refractory raw material, and said binder has a residual ratio of 30% by weight or less.
